(19) **Europäisches Patentamt / European Patent Office / Office européen des brevets**

(11) **EP 3 503 069 A1**

(12) # EUROPEAN PATENT APPLICATION
published in accordance with Art. 153(4) EPC

(43) Date of publication:
**26.06.2019 Bulletin 2019/26**

(21) Application number: **17840784.7**

(22) Date of filing: **09.05.2017**

(51) Int Cl.:
***G08G 1/123*** (2006.01)

(86) International application number:
**PCT/CN2017/083609**

(87) International publication number:
**WO 2018/032808 (22.02.2018 Gazette 2018/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **19.08.2016 CN 201610695243**

(71) Applicant: **Dalian University Of Technology**
**Dalian, Liaoning 116024 (CN)**

(72) Inventors:
• **ZHONG, Shaopeng**
**Liaoning 116024 (CN)**

• **WANG, Quanzhi**
**Liaoning 116024 (CN)**
• **WANG, Zhong**
**Liaoning 116024 (CN)**
• **YAO, Ronghan**
**Liaoning 116024 (CN)**
• **JUN, Haimin**
**Liaoning 116024 (CN)**
• **ZHAO, Ji**
**Liaoning 116024 (CN)**
• **ZHANG, Lu**
**Liaoning 116024 (CN)**

(74) Representative: **Hanna Moore + Curley**
**Garryard House**
**25/26 Earlsfort Terrace**
**Dublin 2, D02 PX51 (IE)**

(54) **BIG DATA BASED BUS LINE SCHEDULE COLLABORATIVE OPTIMIZATION METHOD**

(57) The present invention relates to a collaborative optimization method for bus timetables based on big data, which belongs to the technical field of urban bus operation and management. Bus GPS data, IC card data and line station data are fused together to provide real-time operation data for the formulation of bus timetables, and a bus timetable optimization model considering transfer between buses and rail transit lines is proposed. In the model, by taking the departure interval of each time period as a decision variable and taking the minimum total system cost as an objective function, the waiting time cost of non-transfer passengers, the waiting time cost of transfer passengers, and the operation cost of bus operation enterprises are comprehensively considered. By means of the present invention, passenger flow data are acquired through multisource data fusion, a large number of manpower is saved, and the accuracy of data is increased. The rationality of compiling the bus timetable is increased by considering transfer between ground buses and rail transit lines. The bus timetable is optimized by establishing a data model. The model takes into account both the waiting time cost of passengers and the operation cost of enterprises, and realizes the coordination of benefits between passengers and enterprises.

Fig.7( Fig.7 as an illustration in Abstract)

Fig.1

**Description**

**Technical Field**

The present invention relates to a collaborative optimization method for bus timetable based on big data, which belongs to the technical field of urban bus operation and management.

**Background**

In Study on Deadheading in Minimum Time of Public Transfer Under the Condition of ITS, Yang Xiao-guang, a linear programming model is established by taking the minimum time of public transfer as a goal, and the theoretical significance and practical value of the method are demonstrated by a numerical example. In Study on Bus Timetable Optimization Based on Reliability, Liu Huan-yu, by taking the arrival punctuality rate, operation time reliability and service interval reliability as constraints and taking the maximum social welfare as a goal, a bus timetable optimization model based on reliability is established. However, there are three main problems in the existing studies: first, most of the used passenger flow data are obtained by manual survey. As a result, not only a great deal of labor force are consumed, but also the accuracy of data may not be guaranteed; second, the previous studies mainly focus on transfer between buses, but neglect transfer between bus and rail transit; and third, the existing studies use passengers at transfer stations as study objects, but neglect coordination between non-transfer passengers and transfer passengers on the whole line and benefit distribution between passengers and bus operation enterprises. In the present invention, on this basis, bus passenger flow data are acquired using multisource data fusion technology, and a model is established by considering the minimum system cost of transfer between buses and rail transit lines as an objective function, thereby optimizing bus timetables.

**Summary**

In the present invention, accurate bus operation data and passenger flow data are acquired using multisource data fusion, and an optimization model considering transfer between bus system and rail transit system is proposed for bus timetable optimization.

A collaborative optimization method for bus timetable based on big data, comprising the following steps:

   I. Acquisition of Bus Operation Data and Passenger Flow Data
   1. Acquisition of Bus Operation Data
   1.1 Judgment of Bus Operation Direction

The bus operation direction is divided into an up direction and a down direction, and buses move in two directions according to the order of scheduling; up and down bus lines respectively possess independent operation lines, bus stops, and operation time periods; bus operation states and passenger flow requirements are also relatively independent, and data are divided into data of two operation directions; there is no attribute field for clearly characterizing operation directions in the bus GPS data, and the angle field (ANGLE) recording a bus operation direction is relatively high in error rate, and may not be used for judging the bus operation direction through analysis. Therefore, there is a need to use a certain judgment rule to acquire information about bus operation directions in the bus GPS data.

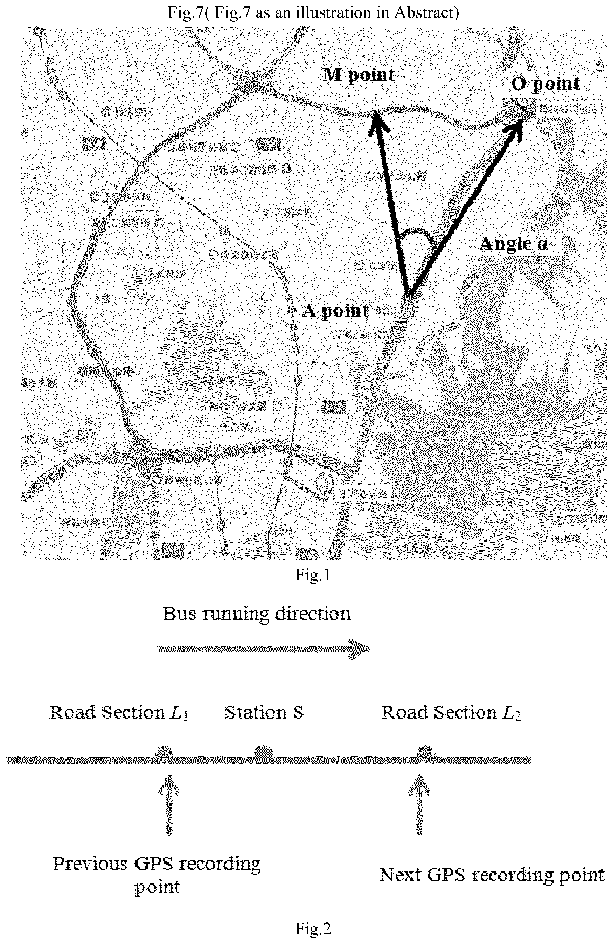

There are many methods for judging bus operation directions, and because of different line directions and data quality, there are differences among validities of various methods. In the present invention, by taking No.376 bus of Shenzhen as an example, when considering that the line approximates to a semi-ring, as shown in Figure 1, the bus operation direction is judged using the following steps:

   (1) Finding an approximate position of the center of the semi-ring line as a reference point, and recording it as $A$;
   (2) Recording the position of the origin station in the up direction as $O$, and recording the latitude and longitude position recorded in the bus GPS data as $M$;
   (3) Calculating the included angle between a vector $\overrightarrow{AO}$ and a vector $\overrightarrow{AM}$, recording it as $\alpha$, adding a field N_ANGLE to the bus GPS data, and recording corresponding $\alpha$ value to all data;
   (4) Ranking the bus GPS data according to bus number (NUMBER) (license plate number), ranking the same bus number according to a record time field (TIME). Comparing $\alpha$ value variation trends of two adjacent GPS data of the same bus, if the $\alpha$ value increases with time gradually, indicating that the bus operates anticlockwise, i.e. the bus operation direction is up direction; and
   (5) Repeating step (4) until all bus GPS data are traversed.

(1.2) Acquisition of Bus Arrival Data

For the bus arrival data, there is a need to fuse processed bus GPS data and bus station data. A bus arrival data sheet is established first, including four fields in total, i.e. station ID (S_ID), bus arrival time (S_TIME), bus number (NUMBER), and bus operation direction (DIRECTION);

Table 1 Bus Arrival Data Sheet

| Bus Arrival Data Field | Data type |
| --- | --- |
| S_ID | INT |
| S_TIME | DATETIME |
| NUMBER | VARCHAR |
| DIRECTION | VARCHAR |

Data of arriving at station $S$ of all buses in the up direction are recorded in the bus arrival data sheet, including the steps as follows:

(1) Extracting all data from the bus GPS data in which the buses run in the "up" direction;
(2) Ranking the bus GPS data extracted in step (1) according to bus numbers first, and then ranking bus numbers of the same bus according to bus arrival time; and in the continuous bus numbers of the same bus, if the previous bus GPS data is matched with a road section $L_1$, and the latter bus GPS data is matched with a road section $L_2$, taking a GPS time data intermediate value between $L_1$ and $L_2$ as the time when the bus arrives at station $S$;
(3) Writing station $S$ ID, the time when bus arrives at station $S$, bus numbers, and bus operation directions into corresponding bus arrival time data sheet, until all bus GPS data in the up direction are processed, and obtaining a bus arrival data sheet;

Bus arrival data in the down direction is obtained in the same manner;

(1.3) Acquisition of Bus Travel Time

Establishing a bus travel time data table, including five fields, i.e. bus number (NUMBER), operation direction (DIRECTION), origin station arrival time (O_TIME), end station arrival time (E_TIME) and travel time (INTERVAL), the data structure is shown in Table 2.

Table 2 Bus Travel Time Data Structure

| Travel Time Data Field | Data Type |
| --- | --- |
| NUMBER | INT |
| DIRECTION | VARCHAR |
| O_TIME | DATETIME |
| E_TIME | DATETIME |
| INTERVAL | INT |

By taking an up line as an example, the specific steps of acquiring up line bus travel time are as follows:

(1) Extracting all data of buses in operation direction "up" from the bus arrival data sheet, ranking the bus GPS data according to bus numbers first, and then further ranking bus number of the same bus according to bus arrival time;
(2) For each bus arrival time data, if the station ID is consistent with the origin station of the bus operation direction, taking the data as departure data of the origin station, and if the station ID is consistent with the end station of the bus operation direction, taking the data as arrival data of the end station; respectively writing bus number, bus operation direction, origin station arrival time, and end station arrival time into corresponding bus travel time data table;
(3) Calculating the interval between the origin station arrival time and the end station arrival time, and writing it in the travel time field, until all arrival time data of buses in the up direction are traversed, obtaining a bus travel time data sheet;

Bus travel time in the down direction is obtained in the same manner;

(2) Acquisition of Passenger Flow Data

(2.1) Acquisition of Passenger Boarding stations

Rail transit card data records the passenger inbound and outbound station data. Thus the boarding station and getting-off station can be determined directly;

Bus IC card data does not record passenger boarding station information. To determine passenger boarding time, we need to match and fuse the card-swiping time and bus number field in the bus IC card data with the bus arrival time and bus number field in the bus arrival data sheet;

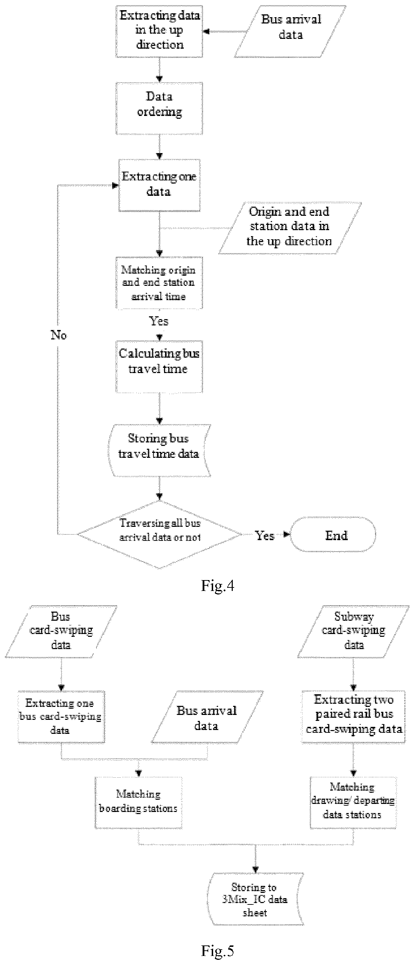

In order to record the fusion result of bus arrival data and bus IC card data, these data can be stored together with the rail transit card data to facilitate to further acquire getting-off station data, a Mix_IC data sheet is established to store data. The Mix_IC data sheet includes ten fields, i.e. IC card record ID (ID), line name (LINE), bus number (NUMBER), line operation direction (DIRECTION), boarding station ID (U_ID), boarding station name (U NAME), boarding time (U TIME), getting-off station ID (D_ID), getting-off station name (D_NAME), and getting-off time (D_TIME). See Table 3 for the data structure, and the boarding station acquisition procedure is shown in Figure 5.

Table 3 Structure of Mix IC Data Sheet

| Field Name | Attribute | Data Type | Length |
| --- | --- | --- | --- |
| ID | IC card record ID | VARCHAR | 10 |
| LINE | Line name | VARCHAR | 10 |
| NUMBER | Bus number | VARCHAR | 5 |
| DIRECTION | Line operation direction | VARCHAR | 2 |
| U_ID | Boarding Station ID | INT | 2 |
| U_NAME | Boarding station name | VARCHAR | 5 |
| U_TIME | Boarding time | DATETIME | 19 |
| D_ID | Getting-off station ID | INT | 2 |
| D_NAME | Getting-off station name | VARCHAR | 5 |
| D_TIME | Getting-off time | DATETIME | 19 |

Steps of matching and fusing bus arrival data with bus IC card data are as follows:

(1) Extracting any bus IC card data, and correspondingly writing data of ID, LINE, and NUMBER in the bus IC card data into the ID, LINE, and NUMBER fields of the Mix_IC data sheet;

(2) Matching a record indicating that the bus arrival time is closest to the card-swiping time field, which is consistent with the bus IC card data NUMBER field extracted in step (1) in the bus arrival data sheet, and correspondingly writing S_ID and S_TIME fields of this record into the U_ID and U_TIME fields of the Mix_IC data sheet, until all the bus IC card data are traversed;

Both ground bus and rail transit belong to the public transportation system, and fares of both can be paid by IC cards. Therefore, it is necessary to process the bus card-swiping data and rail transit card-swiping data into the same data sheet, so as to facilitate the following passenger flow origin-destination (OD) data analysis. Different from bus card-swiping data, data of the same rail transit trip are recorded in "boarding station" and "getting-off station" two fields. Therefore, the rail transit card-swiping data need to be processed before being placed in the Mix IC data sheet, the steps are as follows:

(1) Arranging rail transit card-swiping data according to IC card record IDs first, and then further arranging record time fields of the same IC card record ID;

(2) Extracting two continuous rail transit card-swiping data of step (1), wherein the ID and LINE fields are identical, the DIRECION field of the previous data is "boarding station", and the DIRECION field of the latter data is "getting-off station"; and correspondingly writing data of the ID and LINE fields into the ID and LINE fields of the Mix_IC data sheet;

(3) Correspondingly writing station name and card-swiping time for boarding station of the previous data into the U_NAME and U_TIME fields of the Mix IC data sheet, and correspondingly writing station name and card-swiping time for getting-off station of the latter data into the D_NAME and D_TIME fields of the Mix_IC data sheet;

(4) Matching boarding and getting-off station IDs according to the station ID sheet, station name for the boarding station, and the station name for getting-off station (U_NAME and D_NAME), and writing these data into the U_ID and D_ID fields of the Mix_IC data sheet, until all rail transit card-swiping data are traversed;

(2.2) Acquisition of Passenger Getting-off Stations

It is found by analyzing the residents travel behavior that the number of home-based bus travelers takes a high proportion in the total number of travelers, i.e. most travelers take home as both starting point and end point in their daily trip, and the travel activity chain forms a closed loop; for a traveler using the bus IC card more than twice in a day, the getting-off station where he/she takes the ground bus arrives can be determined according to the travel activity chain;

The getting-off station is determined using data recorded in the Mix IC data sheet, and the acquired getting-off station data are written into the D_ID field of the Mix IC data sheet; steps of judging passenger getting-off stations are as follows:

(1) Extracting data of the same ID from the Mix_IC data sheet, and arranging them according to the U_TIME field;
(2) Judging whether the previous data and the latter data of the same ID are for the same line: if it is judged that the two data are for the same line, taking the latter card-swiping boarding station as the previous card-swiping getting-off station; and if it is judged that the two data are for different lines, taking a transfer station of the previous card-swiping line nearest to the latter card-swiping boarding station as the getting-off station of the previous data;
(3) Taking the boarding station of the first card-swiping as the getting-off station of the last card-swiping for the same ID, until all data in the Mix IC data sheet are traversed;

(2.3) Judgment of Passenger Transfer Behavior

Whether the interval between the previous getting-off time and the latter boarding time exceeds the set upper limit of transfer time is used as a basis for judging whether the two consecutive bus travel is a transfer behavior. Taking into account the line departure interval, road congestion and other factors, 30 minutes are set as the upper limit of transfer time.

First, there is a need to match getting-off time of passengers, the steps are as follows:

(1) Extracting a data from the Mix_IC data sheet, matching the bus number, line operation direction, and getting-off station ID fields in the Mix IC data sheet with the bus number, line operation direction, and station ID fields in the bus arrival data sheet to obtain bus arrival time; Because buses repeatedly operate between the up direction and the down direction in one day, there should be multiple bus arrival time at the same getting-off station in the bus arrival data sheet;
(2) Selecting bus arrival time, from the boarding time field in the Mix IC data sheet, which is after the boarding time and having the shortest time interval as the getting-off time; and writing the matched getting-off time into the getting-off time field (D_TIME) of the Mix IC data sheet, until all data in the Mix IC data sheet are traversed;

Judging whether two consecutive card-swiping records of a passenger belong to a transfer, the steps are as follows:

(1) Arranging the Mix_IC data sheet according to the IC card record IDs first, and then ranking record IDs of the same IC card according to the boarding time field;
(2) Extracting two consecutive records of the same ID, subtracting the getting-off card-swiping time of the previous data from the boarding card-swiping time of the latter data, and if the time interval is less than 30 minutes, considering it as a transfer; and traversing all data in the Mix IC data sheet.

II. Establishment of Model

2. Model Hypothesis

(1) Up and down directions of both ground buses and rail transits are taken as two different lines, i.e. there is only one operation direction for one line. it is supposed that all buses depart from the origin station according to the timetable strictly, the influence of road traffic condition on bus operation is neglected, and the travel time distribution of buses among all stations is already known; departure intervals of buses at the same time period are identical, the number of buses on the same line is fixed, and models of buses are all identical; buses departure according to the sequence of operation, there is no bunching and delay at station; non-transfer passengers are evenly distributed in the process of arriving at the station, and the arrival rates of passengers at the same time period are identical; the transfer walking time of passengers at the transfer station is already known, and the transfer walking time is less than the departure interval between a ground bus and a rail transit; passengers get on the bus as long as the bus arrives at the station, ignoring the situation of continuing to wait due to traffic jam and other reasons; operation buses on the line are all whole-line buses, ignoring the shuttle bus, station express scheduling scheme.

(2) Parameter Definitions

$s$ -Sequence of ground bus stations, $s \in S$;

$\bar{s}$ -Sequence of transfer stations,;

$e_{\bar{s}}$ -Number of transfer stations;

$B^i$ -Ground bus departing within the study period and having the serial number of $i$;

$R^j$ -Rail transit departing at study time period and having the serial number of $j$ ;

$e_B$ -Departure number of ground buses $B$ within the study period;

$e_R$ -Departure number of rail transit $R$ within the study period;

$\alpha$ -Duration of study time period, $\alpha = T_{end} - T_{start}$;

$h_B$ -Departure interval of ground buses $B$ within the study period;

$h_R$ -Departure interval of rail transit $R$ within the study period;

$h_{B,min}$, $h_{B,max}$ -Minimum and maximum departure intervals of ground buses;

$h_{R.min}$, $h_{R,max}$ -Minimum and maximum departure intervals of rail transit;

$\gamma_B^s$ -Arrival rate of passengers taking ground buses $B$ at station s within the study period;

$t_{BR}^{\bar{s}}$ -Walking time at transfer station $\bar{s}$ from ground bus station to rail transit station;

$T_B^{i,\bar{s}}$ -Time when ground bus $B^i$ arrives at transfer station $\bar{s}$;

$T_R^{j,\bar{s}}$ -Time when rail transit $R^j$ arrives at transfer station $\bar{s}$;

$T_B^1$ -Time when the ground bus with the serial number of 1 departs from the origin station;

$T_R^1$ -Time when the rail transit with the serial number of 1 departs from the origin station;

$t_B^{\bar{s}}$ -Travel time for ground bus to run to transfer station $\bar{s}$ from the origin station;

$t_R^{\bar{s}}$ -Travel time for rail transit to run to transfer station $\bar{s}$ from the origin station in the study section;

$t_B$ -Travel time of ground bus within the study period;

$t_R$ -Travel time of rail transit in the study section within the study time period;

$L_B^{\bar{s}}$ -Distance between origin station of ground bus line and transfer station $\bar{s}$;

$L_R^{\bar{s}}$ -Distance between origin station of rail transit line and transfer station $\bar{s}$;

$L_B$ -Entire length of ground bus line;

$L_R$ -Length of rail transit line in study section;

$U_c$ -Time value of unit passenger waiting time (dollar/minute);

$U_p$ -Operation cost of unit departure number of ground bus line (dollar/km);

$C_B$ -Waiting time cost for non-transfer passengers to take a ground bus within the study period;

$C_{BR}$ -Transfer waiting time cost for passengers to transfer from ground bus to rail transit within the study period;

$C_{RB}$ -Transfer waiting time cost for passengers to transfer from rail transit to ground bus within the study period;

$C_P$ -Cost of bus operation enterprise within the study period;

$C_S$ -Total system cost within the study period;

(3) Constraint Conditions

According to model hypothesis, the transfer walking time of a passenger at the transfer station is less than the departure interval between a ground bus and a rail transit, for all $\bar{s} \in \bar{S}$,

$$t_{BR}^{\bar{s}} \leq \left( h_B, h_R \right)_{min} \quad (3.1)$$

The departure interval between ground bus and rail transit should not be less than the minimum departure interval, and should not be greater than the maximum departure interval at the same time, then:

$$h_{B,\min} \le h_B \le h_{B,\max} \quad (3.2)$$

$$h_{R,\min} \le h_R \le h_{R,\max} \quad (3.3)$$

(4) Objective Function

The relationship between the departure number of ground buses $e_B$ within the study time period and the departure interval $h_B$ is:

$$e_B = \left\lfloor \frac{a}{h_B} \right\rfloor \quad (4.1)$$

The relationship between the departure number of rail transit $e_R$ within the study time period and the departure interval is:

$$e_R = \left\lfloor \frac{a}{h_R} \right\rfloor \quad (4.2)$$

1) Waiting time cost for non-transfer passenger to take ground bus

For a passenger who arrives at station $s$ and takes ground bus $B^i$ departing within the study time period and having a serial number of $i$, the waiting time can be expressed as:

$$c_B^{i,s} = \frac{1}{2} U_c \gamma_B^s \left( h_B \right)^2 \quad (4.3)$$

Then, the waiting time cost of the non-transfer passenger can be expressed as:

$$C_B = \sum_{s=1}^{e_s} \sum_{i=1}^{e_B} c_B^{i,s} \quad (4.4)$$

2) Transfer waiting time cost for passenger to transfer from ground bus to rail transit

The time $T_B^i$ when ground bus $B^i$ with a serial number of $i$ arrives at the transfer station $\bar{s}$ can be expressed as:

$$T_B^{i,\bar{s}} = T_B^1 + (i-1)h_B + t_B^{\bar{s}} \quad (4.5)$$

where the travel time $t_B^{\bar{s}}$ for the ground bus to run to the transfer station $\bar{s}$ from the origin station can be calculated using equation 4.6:

$$t_B^{\bar{s}} = \frac{L_B^{\bar{s}}}{L_B} t_B \qquad (4.6)$$

The time when rail transit $R^j$ with a serial number of $j$ arrives at the transfer station $\bar{s}$ can be expressed as:

$$T_R^{j,\bar{s}} = T_R^1 + (j-1)h_R + t_R^{\bar{s}} \qquad (4.7)$$

where the travel time $t_R^{\bar{s}}$ for the rail transit to run to the transfer station $\bar{s}$ from the origin station can be calculated using equation 4.8:

$$t_R^{\bar{s}} = \frac{L_R^{\bar{s}}}{L_R} t_R \qquad (4.8)$$

The walking time for a passenger to transfer from ground bus $B^i$ to rail transit $R^j$ at transfer station $\bar{s}$ is $t_{BR}^{\bar{s}}$, and the transfer waiting time can be expressed as:

$$\Box t_{BR}^{\bar{s}} = \eta_{BR}^{i,j} \left( T_R^{j,\bar{s}} - T_B^{i,\bar{s}} - t_{BR}^{\bar{s}} \right) \qquad (4.9)$$

where $\eta_{BR}^{i,j}$ is a Boolean variable,

$$\eta_{BR}^{i,j} = \begin{cases} 1; T_R^{j-1,\bar{s}} < T_B^{i,\bar{s}} + t_{BR}^{\bar{s}} \le T_R^{j,\bar{s}} \\ 0; \text{others} \end{cases} \qquad (4.10)$$

The total number of passengers who take the ground bus departing within the study time period and get down at transfer station $\bar{s}$ is $Q_d^{\bar{s}}$, if the transfer rate of transfer from ground bus to rail transit at transfer station $\bar{s}$ is $\lambda_{BR}^{\bar{s}}$, then the total number of passengers who take the ground bus departing within the study time period and get down at transfer station $\bar{s}$ to transfer to rail transit can be calculated according to equation 4.11:

$$P_{BR}^{\bar{s}} = \lambda_{BR}^{\bar{s}} Q_d^{\bar{s}} \qquad (4.11)$$

If passengers who transfer from the ground bus to rail transit at transfer station $\bar{s}$ are equally distributed to all ground buses, the number of passengers who take ground bus $B^i$ and transfer to rail transit at transfer station $\bar{s}$ can be expressed as:

$$p_{BR}^{\bar{s}} = \frac{P_{BR}^{\bar{s}}}{e_B} \qquad (4.12)$$

By considering the hypothesis that transfer walking time $t_{BR}^{\bar{s}}$ does not exceed the departure interval of ground buses, the situation of transfer from ground bus departing within time period $k$ to rail transit departing within time period $k + 1$ can not occur. Therefore, the transfer waiting time cost for passenger to transfer from rail transit to ground bus at transfer station $\bar{s}$ is:

$$c_{BR}^{\bar{s}} = U_c \sum_{j=1}^{e_R^k} \sum_{i=1}^{e_B^k} \eta_{BR}^{i,j} p_{BR}^{\bar{s}} (T_R^{j,\bar{s}} - T_B^{i,\bar{s}} - t_{BR}^{\bar{s}}) \qquad (4.13)$$

The transfer waiting time cost for passengers to transfer from ground buses to rail transit at all transfer stations within the study time period is:

$$C_{BR} = U_c \sum_{s=1}^{e_{\bar{s}}} \sum_{j=1}^{e_R^k} \sum_{i=1}^{e_B^k} \eta_{BR}^{i,j} p_{BR}^{\bar{s}} (T_R^{j,\bar{s}} - T_B^{i,\bar{s}} - t_{BR}^{\bar{s}}) \qquad (4.14)$$

where

$$\eta_{BR}^{i,j} = \begin{cases} 1; T_R^{j-1,\bar{s}} < T_B^{i,\bar{s}} + t_{BR}^{\bar{s}} \leq T_R^{j,\bar{s}} \\ 0; \text{others} \end{cases} \qquad (4.15)$$

3) Transfer waiting time cost for passenger to transfer from rail transit to ground bus

The walking time for a passenger to transfer from rail transit $R^j$ to ground bus $B^i$ at transfer station $\bar{s}$ is $t_{RB}^{\bar{s}}$, and the transfer waiting time can be expressed as:

$$\square t_{RB}^{\bar{s}} = \eta_{RB}^{j,i} \left( T_B^{i,\bar{s}} - T_R^{j,\bar{s}} - t_{RB}^{\bar{s}} \right) \qquad (4.16)$$

where $\eta_{RB}^{j,i}$ is a Boolean variable,

$$\eta_{RB}^{j,i} = \begin{cases} 1; T_B^{i-1,\bar{s}} < T_R^{j,\bar{s}} + t_{RB}^{\bar{s}} \leq T_B^{i,\bar{s}} \\ 0; \text{others} \end{cases} \qquad (4.17)$$

The total number of passengers who get on at transfer station $\bar{s}$ and take ground bus departing within the study time period is $Q_u^{\bar{s}}$, and if the transfer rate of transfer from rail transit to ground bus at transfer station $\bar{s}$ is $\lambda_{RB}^{\bar{s}}$, the total number of passengers who get on at transfer station $\bar{s}$ and transfer to ground bus departing within the study time period can be calculated according to equation 4.18:

$$P_{RB}^{\bar{s}} = \lambda_{RB}^{\bar{s}} Q_u^{\bar{s}} \qquad (4.18)$$

If passengers who transfer from rail transit to ground buses at transfer station s are equally distributed to all ground buses, the number of passengers who transfer from rail transit to ground bus $B^i$ at transfer station $\bar{s}$ can be expressed as:

$$p_{RB}^{\bar{s}} = \frac{P_{RB}^{\bar{s}}}{e_R} \quad (4.19)$$

By considering the hypothesis that transfer walking time $t_{BR}^{\bar{s}}$ does not exceed the departure interval of rail transit, the situation of transfer from rail transit departing within the time period $k$ to ground bus departing within time period $k$+1 can not occur. Therefore, the waiting time cost for passengers to transfer from rail transit to ground buses at transfer station $\bar{s}$ within the time period $k$ is:

$$c_{RB}^{\bar{s}} = U_c \sum_{i=1}^{e_B^k} \sum_{j=1}^{e_R^k} \eta_{RB}^{j,i} p_{RB}^{\bar{s}} (T_B^{i,\bar{s}} - T_R^{j,\bar{s}} - t_{RB}^{\bar{s}}) \quad (4.20)$$

The waiting time cost for passengers to transfer from rail transit to ground buses at all transfer stations within the study time period is:

$$C_{RB} = U_c \sum_{s=1}^{e_{\bar{s}}} \sum_{i=1}^{e_B^k} \sum_{j=1}^{e_R^k} \eta_{RB}^{j,i} p_{RB}^{\bar{s}} (T_B^{i,\bar{s}} - T_R^{j,\bar{s}} - t_{RB}^{\bar{s}}) \quad (4.21)$$

where

$$\eta_{RB}^{j,i} = \begin{cases} 1; T_B^{i-1,\bar{s}} < T_R^{j,\bar{s}} + t_{RB}^{\bar{s}} \le T_B^{i,\bar{s}} \\ 0; \text{others} \end{cases} \quad (4.22)$$

4) Bus Enterprise Operation Cost

The bus enterprise operation cost is related to the entire length of the line and the departure number within the study time period, and can be expressed by equation 4.26:

$$C_P = U_P L_B e_B \quad (4.23)$$

5) Total System Cost

The total system cost within the study period includes: waiting time cost for non-transfer passenger to take ground buses, waiting time cost for passenger to transfer from ground bus to rail transit, waiting time cost for passenger to transfer from rail transit to ground bus, and bus enterprise operation cost, i.e.:

$$C_S = C_B + C_{BR} + C_{RB} + C_P \quad (4.24)$$

The objective function is to minimize total system cost, i.e. min $C_S$; and the decision variable is the departure interval $h_B$ of ground buses.

In the present invention, passenger flow data are acquired by matching and fusing bus GPS data, IC card data, and geographic data of stations. Transfers between buses and rail transits are fully taken into account and the benefits of passengers and bus enterprises are coordinated by establishing a mathematical optimization model, thereby achieving the maximum total benefit. It is a great innovation breakthrough. By taking up direction of No. 376 bus of Shenzhen as a case for verification and analysis, an optimized result can be obtained finally. The invention has the following characteristics:

1. Convenient acquisition of passenger flow data: bus GPS data, IC card data, and geographic data of stations are used, and detailed passenger flow data for IC card users are obtained by matching and fusing these data. Thus, the travel information of each IC card user in a day can be obtained, and a large number of time and energy of manual survey can be saved.

2. Classification of waiting time costs: by considering the availability of passenger transfer and the difference of transfer between different travel modes, waiting time costs are classified into three categories, including waiting time cost for non-transfer passenger to take ground bus, waiting time cost for passenger to transfer from ground bus to rail transit, and waiting time cost for passenger to transfer from rail transit to ground bus. In this way, the possibility of various travel modes of passengers is fully taken into account, so that the results are more accurate and scientific.

3. Establishment of mathematical model: the bus timetable is optimized by establishing a mathematical model. Both passenger transfer time cost and bus enterprise operation cost are taken into account when establishing the model. Thus, the model can minimize the sum of the two costs and achieve the maximum social benefit. Such method improves the scientific city of compiling the bus timetable.

4. Application prospect: the phenomenon of traffic jam in many big cities is becoming more and more serious. Only by developing public transportation can the traffic jam be alleviated effectively. Moreover, it is an important trend to apply big data in the field of transportation.

The invention is based on the above two points. Using multi-source transportation big data fusion technology, through the establishment of mathematical model to achieve the optimization of bus timetable. In addition, by means of the method for fusing various data to obtain bus passenger flow data in this invention, a large number of manpower are saved.

**Description of the Drawings**

Figure 1 is a schematic diagram for judging bus operation direction of the present invention.
Figure 2 is a schematic diagram for judging a bus arrives at a station of the present invention.

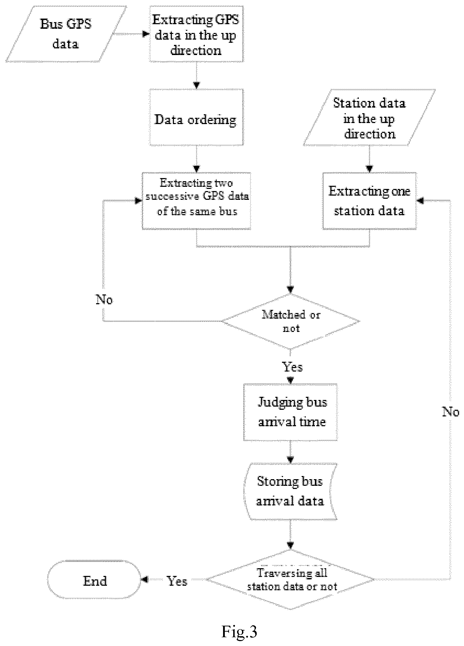

Figure 3 is a flow chart for acquiring bus arrival data of the present invention.
Figure 4 is a flow chart for acquiring bus travel time data of the present invention.
Figure 5 is a flow chart for acquiring a boarding station of the present invention.
Figure 6 is an up direction chart of No. 376 bus of the present invention.
Figure 7 is a line chart of a rail transit of the present invention.
Figure 8 is a time-space operation chart of buses of the present invention.
Figure 9 is a bus travel time variation diagram of the present invention.

**Detailed Implementation Method Description**

The specific embodiments of the present invention are described below in detail in conjunction with examples, and implementation effects of the present invention are simulated.

1. Current Status of the Study Line

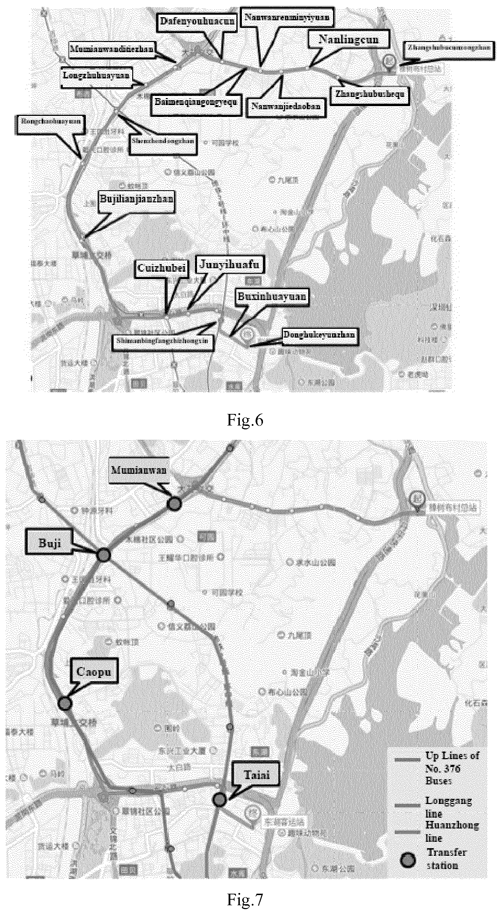

The bus line studied in the present invention is the up direction of Bus Route 376 of Shenzhen. The origin station is Zhang-shu-bu-cun-zong-zhan station, the terminal station is Dong-hu station. There are 17 stations in total along the road, and the total length is about 11.7 km. The geographic positions of up direction and stations are as shown in Figure 6. The line of No. 376 bus is engaged with a plurality of rail transit stations of Long-gang Line and Huan-zhong Line (as shown in Figure 7), passengers frequently transfer between rail transits and conventional buses, especially at morning and evening rush hours, the transfer proportion of passengers is relatively high. Therefore, there is a need to consider the coordination between bus and rail transit when compiling the bus timetable.

2. Basic Parameters of the Study Line

According to the acquired geographic data of up and down directions of No. 376 bus and stations, basic information about the bus line is as shown in Table 4.

Table 4 Information about Stations of Up Direction of No. 376 Bus

| Serial Number of Stations | Station Name | Station Distance (m) | Transfer Line | Transfer Station | Average Transfer Walking Time (minute) |
|---|---|---|---|---|---|
| 1 | Zhang-shu-bu-cun-zong-zhan | 0 | | | |
| 2 | Zhang-shu-bu-she-qu | 1196 | | | |
| 3 | Nan-ling-cun | 500 | | | |
| 4 | Nan-wan-jie-dao-ban | 402 | | | |
| 5 | Nan-wan-ren-min-yi-yuan | 320 | | | |
| 6 | Bai-men-qian-gong-ye-qu | 210 | | | |
| 7 | Da-fen-you-hua-cun | 384 | | | |
| 8 | Mu-mian-wan-di-tie-zhan | 1050 | Long-gang line | Mu-mian-wan | 2 |
| 9 | Long-zhu-hua-yuan | 515 | | | |
| 10 | Shen-zhen-dong-zhan | 608 | Long-gang line, Huan-zhong line | Buji | 2 |
| 11 | Rong-chao-hua-yuan | 926 | | | |
| 12 | Bu-ji-lian-jian-zhan | 1240 | Long-gang line | Caopu | 2 |
| 13 | Cui-zhu-bei | 2352 | | | |
| 14 | Jun-yi-hua-fu | 329 | | | |
| 15 | Shi-man-bing-fang-zhi-zhong-xin | 437 | Huan-zhong line | Tai'an | 2 |
| 16 | Bu-xin-hua-yuan | 398 | | | |
| 17 | Dong-hu-ke-yun-zhan | 847 | | | |

According to the data provided by the bus company, information about the origin station and the terminal station, and the departure time of the first bus and the last bus in the study section of Long-gang line, Huan-zhong line, and No. 376 bus are as shown in Table 5.

Table 5 Departure Information about Up Direction of No. 376 Bus

| Line Name | Operation Direction | Name of Origin Station | Departure Time of First Bus | Departure Time of Last Bus |
|---|---|---|---|---|
| No. 376 | Up | Zhang-shu-bu-cun-zong-zhan | 06:30 | 22:00 |
| | Down | Dong-hu-ke-yun-zhan | 07:10 | 22:30 |

(continued)

| Line Name | Operation Direction | Name of Origin Station | Departure Time of First Bus | Departure Time of Last Bus |
|---|---|---|---|---|
| Long-gang line (section) | Up | Mu-mian-wan | 07:03 | 23:33 |
| | Down | Caopu | 07:02 | 23:32 |
| Huan-zhong line (section) | Up | Buji | 06:59 | 23:53 |
| | Down | Tai'an | 06:35 | 23:07 |

3. Analysis of Bus Operation State

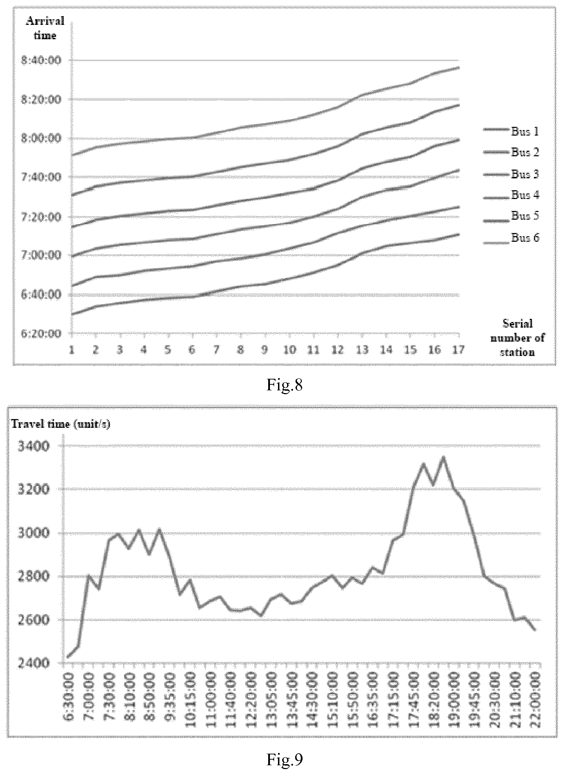

Arrival data and travel time data of buses obtained from data fusion can be used for analyzing bus operation state. Data of the up direction of No. 376 bus of Shenzhen on June 9, 2014 is taken as an example. Figure 8 is a time-space operation chart of six consecutive buses within the time period of 6:30-9:00. The horizontal coordinate represents station sequence, and the vertical coordinate represents arrival time. It can be seen from the time-space operation chart of buses that departure intervals of No. 376 buses are larger, and there is no bunching phenomenon substantially, and buses run smoothly.

The travel time of all buses throughout the day is as shown in Figure 9. It can be seen from Figure 9 that the travel time of No. 376 bus is relatively long at morning and evening peak period, and the travel time of the first bus and the last bus is the shortest. Because more passengers get on and get down at morning and evening peak period, the time duration for the buses to stay at stations is relatively long. In addition, because traffic jam is easy to occur at morning and evening peak period, Figure 8 conforms to the actual situation.

4. Line Passenger Flow Statistics

According to the bus GPS data, bus IC card data, and rail transit card-swiping data of Shenzhen on June 9, 2014, the passenger flow at all stations of the up direction of No. 376 bus of Shenzhen and the transfer passenger flow at transfer stations are counted. Table 6 shows the passenger flow of the up direction of No. 376 bus within the time period of 7:00-7:30, and Table 7 shows the transfer passenger flow between the up direction of No. 376 bus and Long-gang line and Huan-zhong line within the time period of 7:00-7:30.

Table 6 Passenger Flow of the Up Direction of No. 376 Bus within Time Period of 7:00-7:30

| Serial Number of Stations | Station Name | Number of Boarding People | Number of Getting-off People | Cumulative Number of People in Section |
|---|---|---|---|---|
| 1 | Zhang-shu-bu-cun-zong-zhan | 9 | 0 | 9 |
| 2 | Zhang-shu-bu-she-qu | 12 | 0 | 21 |
| 3 | Nan-ling-cun | 12 | 3 | 30 |
| 4 | Nan-wan-jie-dao-ban | 18 | 2 | 46 |
| 5 | Nan-wan-ren-min-yi-yuan | 26 | 9 | 63 |
| 6 | Bai-men-qian-gong-ye-qu | 32 | 11 | 84 |
| 7 | Da-fen-you-hua-cun | 27 | 6 | 105 |
| 8 | Mu-mian-wan-di-tie-zhan | 9 | 30 | 84 |
| 9 | Long-zhu-hua-yuan | 26 | 12 | 98 |
| 10 | Shen-zhen-dong-zhan | 12 | 36 | 74 |

(continued)

| Serial Number of Stations | Station Name | Number of Boarding People | Number of Getting-off People | Cumulative Number of People in Section |
|---|---|---|---|---|
| 11 | Rong-chao-hua-yuan | 11 | 18 | 67 |
| 12 | Bu-ji-lian-jian-zhan | 9 | 27 | 49 |
| 13 | Cui-zhu-bei | 10 | 11 | 48 |
| 14 | Jun-yi-hua-fu | 15 | 17 | 46 |
| 15 | Shi-man-bing-fang-zhi-zhong-xin | 7 | 31 | 22 |
| 16 | Bu-xin-hua-yuan | 2 | 21 | 3 |
| 17 | Dong-hu-ke-yun-zhan | 0 | 3 | 0 |

Table 7 Transfer Passenger Flow between No. 376 Bus and Long-gang Line and Huan-zhong Line within Time Period of 7:00-7:30

| Transfer to Rail transit | Bus station | Rail transit Station | Transfer Direction | Number of Transfer People |
|---|---|---|---|---|
| Long-gang line (up) | Mu-mian-wan-di-tie-zhan | Mu-mian-wan | Bus-rail transit | 13 |
| | | | Rail transit-bus | 0 |
| | Shen-zhen-dong-zhan | Buji | Bus-rail transit | 13 |
| | | | Rail transit-bus | 3 |
| | Bu-ji-lian-jian-zhan | Caopu | Bus-rail transit | 11 |
| | | | Rail transit-bus | 1 |
| Long-gang line (down) | Mu-mian-wan-di-tie-zhan | Mu-mian-wan | Bus-rail transit | 5 |
| | | | Rail transit-bus | 0 |
| | Shen-zhen-dong-zhan | Buji | Bus-rail transit | 0 |
| | | | Rail transit-bus | 0 |
| | Bu-ji-lian-jian-zhan | Caopu | Bus-rail transit | 0 |
| | | | Rail transit-bus | 0 |
| Huan-zhong line (up) | Shen-zhen-dong-zhan | Buji | Bus-rail transit | 9 |
| | | | Rail transit-bus | 8 |
| | Shi-man-bing-fang-zhi-zhong-xin | Tai'an | Bus-rail transit | 13 |
| | | | Rail transit-bus | 0 |
| Huan-zhong line (down) | Shen-zhen-dong-zhan | Buji | Bus-rail transit | 8 |
| | | | Rail transit-bus | 0 |
| | Shi-man-bing-fang-zhi-zhong-xin | Tai'an | Bus-rail transit | 6 |
| | | | Rail transit-bus | 2 |

5. Timetable Optimization

5.1 Time Period Division

In this invention, bus timetable optimization is conducted on operation time period of the up direction of No. 376 bus of Shenzhen. According to the change of passenger flow and the departure interval of rail transit, the whole operation time is divided into 8 time periods, and the time periods are shown in Table 8.

Table 8 Time Period Division

| Serial Number of Time Periods | Time Period | Time Period Duration (minute) |
|---|---|---|
| 1 | 6:30-7:30 | 60 |
| 2 | 7:30-9:30 | 120 |
| 3 | 7:30-9:30 | 120 |
| 4 | 11:30-13:30 | 120 |
| 5 | 13:30-16:00 | 150 |
| 6 | 16:00-17:30 | 90 |
| 7 | 17:30-19:30 | 120 |
| 8 | 19:30-22:00 | 150 |

5.2 Model Solving and Timetable Generation

In this invention, particle swarm optimization is used to solve the current problem. In this case, eight time periods are divided in total, so that the particle ID is $X = (x_1, x_2, x_3, x_4, x_5, x_6, x_7, x_8)$, and the objective function of the model is the fitness function of the particles. See Table 9 for the settings of all parameters of particle swarm optimization.

Table 9 Setting of Parameters of Particle Swarm Optimization

| Parameter Symbol | Parameter Attribute | Parameter Value |
|---|---|---|
| $\omega$ | Inertia weight | 0.7 |
| $c_1$ | Learning factor 1 | 2 |
| $c_2$ | Learning factor 2 | 2 |
| max $N$ | Maximum iterations | 500 |
| $n$ | Particle number | 40 |

Optimization is conducted using Microsoft Visual C++2008 software, and an optimal function value is obtained after 500 iterations. The particles obtaining the optimal function value represent the solved departure intervals. Because departure intervals are usually set as integers in minute, the solved departure intervals are rounded, and the departure intervals between adjacent time periods are smoothly processed. The final optimized timetable is as shown in Table 10.

Table 10 Timetable of No. 376 Bus

| Serial Number of Time Periods | Timetable | | | | | |
|---|---|---|---|---|---|---|
| 1 | 06:30 | 06:43 | 06:56 | 07:09 | 07:22 | |
| 2 | 07:33 | 07:42 | 07:51 | 08:00 | 08:09 | 08:18 |
| | 08:27 | 08:36 | 08:45 | 08:54 | 09:03 | 09:12 |
| | 09:21 | 09:30 | | | | |
| 3 | 09:43 | 09:58 | 10:13 | 10:28 | 10:43 | 10:58 |
| | 11:13 | 11:28 | | | | |
| 4 | 11:41 | 11:53 | 12:05 | 12:17 | 12:29 | 12:41 |
| | 12:53 | 13:05 | 13:17 | 13:29 | | |
| 5 | 13:43 | 13:59 | 14:15 | 14:31 | 14:47 | 15:03 |
| | 15:19 | 15:35 | 15:51 | | | |
| 6 | 16:05 | 16:17 | 16:29 | 16:41 | 16:53 | 17:05 |
| | 17:17 | 17:29 | | | | |
| 7 | 17:39 | 17:47 | 17:55 | 18:03 | 18:09 | 18:17 |
| | 18:26 | 18:34 | 18:42 | 18:50 | 18:58 | 19:06 |
| | 19:14 | 19:22 | 19:30 | | | |

(continued)

| Serial Number of Time Periods | Timetable | | | | | |
|---|---|---|---|---|---|---|
| 8 | 19:43  21:31 | 20:01  21:49 | 20:19  22:00 | 20:37 | 20:55 | 21:13 |

5.3 Comparison between Optimization Results and Original Scheme

According to the optimized bus scheduling plan, the number of departure of the up direction of No. 376 bus of Shenzhen throughout the day is 78 in total, the minimum departure interval is 8 minutes, and the maximum departure interval is 18 minutes. Because departure intervals are rounded and smoothly processed, there is a need to recalculate the waiting time cost of non-transfer passengers, the waiting time cost of transfer between bus and rail transit, the waiting time cost of transfer between rail transit and bus, the bus operation cost, and the total system cost according to the optimized timetable. Comparison between optimization results and original scheme is as shown in Table 11.

Table 11 Comparison between Optimization Results and Original Scheme

| Comparison Items | Before Optimization | After Optimization | Reduction Rate |
|---|---|---|---|
| Number of departure (number of times) | 62 | 78 | - |
| Waiting time cost of non-transfer passengers (dollar) | 13686 | 13054 | 4.62% |
| Waiting time cost of transfer between bus and rail transit (dollar) | 4562 | 4037 | 11.51% |
| Waiting time cost of transfer between rail transit and bus (dollar) | 3248 | 2716 | 16.38% |
| Bus operation cost (dollar) | 2901.6 | 3650.4 | -25.8% |
| Total system cost (dollar) | 24397.6 | 23357.4 | 4.26% |

According to the comparison result in Table 11, both the waiting time cost of non-transfer passengers and the waiting time cost of transfer passengers are obviously reduced. The largest decrease is observed for the transfer waiting cost of transfer from rail transit to ground bus, which reaches 16.38%, indicating that the optimized bus timetable greatly facilitates passengers who transfer from rail transit to ground bus. Because the number of departure is increased, the bus operation cost is somewhat increased, but the total system cost is reduced by 4.26%.

Table 12 compares the average waiting time of the transferred passengers before and after the optimization. As a whole, regardless of before optimization or after optimization, the average waiting time of transfer from the ground bus to rail transit is generally lower than the average waiting time of transfer from rail transit to ground bus. After optimization, the average waiting time in two transfer directions are all reduced. Among the transfer from ground bus to rail transit, the largest decrease is observed for the transfer waiting time of transfer from the up direction of No. 376 bus to the up direction of Long-gang line, which reaches 13.48%, and the saved average waiting time is 0.60 minute. In morning peak, the passenger flow in the transfer direction is larger, so that the reduction of average waiting time in this direction is of great significance. In the transfer direction of transfer from rail transit to ground bus, the transfer waiting time of transfer from the down direction of Long-gang line to the up direction of No. 376 bus has a minimum reduction. However, considering that the passenger flow of this transfer line is relatively small, it may not have great influence on the optimization result of the entire line.

Table 12 Comparison of Average Waiting Time of Transfer Passengers

| Transfer Direction | Rail transit Lines | Before Optimization (minute) | After Optimization (minute) | Reduction Rate | Saved Time (minute) |
|---|---|---|---|---|---|
| Bus-Rail transit | Long-gang line | 5.06 | 4.46 | 13.48% | 0.60 |
| | Long-gang line (down) | 5.17 | 4.64 | 10.25% | 0.53 |
| | Huan-zhong line (up) | 5.13 | 4.72 | 7.99% | 0.41 |
| | Huan-zhong line (down) | 5.24 | 4.99 | 9.75% | 0.25 |
| Rail transit-bus | Long-gang line (up) | 8.83 | 7.46 | 15.51% | 1.37 |
| | Long-gang line (down) | 8.95 | 8.36 | 6.63% | 0.59 |
| Rail transit-bus | Huan-zhong line (up) | 9.18 | 7.67 | 16.45% | 1.51 |
| | Huan-zhong line (down) | 8.45 | 6.96 | 17.63% | 1.49 |

**Claims**

1. A collaborative optimization method for bus timetable based on big data, comprising the following steps:

   I. Acquisition of Bus Operation Data and Passenger Flow Data

   (1). Acquisition of Bus Operation Data

   (1.1) Judgment of Bus Operation Direction
   The bus operation direction is divided into an up direction and a down direction, and buses move in two directions according to the order of scheduling; up and down bus lines respectively possess independent operation lines, bus stops, and operation time periods; bus operation states and passenger flow requirements are also relatively independent, and data are divided into data of two operation directions;
   (1.2) Acquisition of Bus Arrival Data
   A bus arrival data sheet is established first, including four fields in total in Table 1, i.e. station ID (S_ID), bus arrival time (S_TIME), bus number (NUMBER), and bus operation direction (DIRECTION);

Table 1 Bus Arrival Data Sheet

| Bus Arrival Data Field | Data type |
|---|---|
| S_ID | INT |
| S_TIME | DATETIME |
| NUMBER | VARCHAR |
| DIRECTION | VARCHAR |

   Data of arriving at station S of all buses in the up direction are recorded in the bus arrival data sheet, including the steps as follows:

   (1) Extracting all data from the bus GPS data in which the buses run in the "up" direction;
   (2) Ranking the bus GPS data extracted in step (1) according to bus numbers first, and then ranking bus numbers of the same bus according to bus arrival time; and in the continuous bus numbers of the same bus, if the previous bus GPS data is matched with a road section $L_1$, and the latter bus GPS data is matched with a road section $L_2$, taking a GPS time data intermediate value between

$L_1$ and $L_2$ as the time when the bus arrives at station $S$;
(3) Writing station $S$ ID, the time when bus arrives at station $S$, bus numbers, and bus operation directions into corresponding bus arrival time data sheet, until all bus GPS data in the up direction are processed, and obtaining a bus arrival data sheet;

Bus arrival data in the down direction is obtained in the same manner;
(1.3) Acquisition of Bus Travel Time Establishing a bus travel time data table, including five fields, i.e. bus number (NUMBER), operation direction (DIRECTION), origin station arrival time (O_TIME), end station arrival time (E_TIME) and travel time (INTERVAL), the data structure is shown in Table 2.

Table 2 Bus Travel Time Data Structure

| Travel Time Data Field | Data Type |
| --- | --- |
| NUMBER | INT |
| DIRECTION | VARCHAR |
| O_TIME | DATETIME |
| E_TIME | DATETIME |
| INTERVAL | INT |

The steps of acquiring up line bus travel time are as follows:

(1) Extracting all data of buses in operation direction "up" from the bus arrival data sheet, ranking the bus GPS data according to bus numbers first, and then further ranking bus number of the same bus according to bus arrival time;
(2) For each bus arrival time data, if the station ID is consistent with the origin station of the bus operation direction, taking the data as departure data of the origin station, and if the station ID is consistent with the end station of the bus operation direction, taking the data as arrival data of the end station; respectively writing bus number, bus operation direction, origin station arrival time, and end station arrival time into corresponding bus travel time data table;
(3) Calculating the interval between the origin station arrival time and the end station arrival time, and writing it in the travel time field, until all arrival time data of buses in the up direction are traversed, obtaining a bus travel time data sheet;

Bus travel time in the down direction is obtained in the same manner;

(2) Acquisition of Passenger Flow Data

(2.1) Acquisition of Passenger Boarding stations
Rail transit card data records the passenger inbound and outbound station data. Thus the boarding station and getting-off station can be determined directly;
Bus IC card data does not record passenger boarding station information. To determine passenger boarding time, we need to match and fuse the card-swiping time and bus number field in the bus IC card data with the bus arrival time and bus number field in the bus arrival time data sheet;
AMix_IC data sheet is established to store data. The Mix_IC data sheet includes ten fields, i.e. IC card record ID (ID), line name (LINE), bus number (NUMBER), line operation direction (DIRECTION), boarding station ID (U_ID), boarding station name (U NAME), boarding time (U TIME), getting-off station ID (D_ID), getting-off station name (D_NAME), and getting-off time (D_TIME).See Table 3 for the data structure.

Table 3 Structure of Mix_IC Data Sheet

| Field Name | Attribute | Data Type | Length |
| --- | --- | --- | --- |
| ID | IC card record ID | VARCHAR | 10 |
| LINE | Line name | VARCHAR | 10 |
| NUMBER | Bus number | VARCHAR | 5 |
| DIRECTION | Line operation direction | VARCHAR | 2 |

(continued)

| Field Name | Attribute | Data Type | Length |
|---|---|---|---|
| U_ID | Boarding Station ID | INT | 2 |
| U_NAME | Boarding station name | VARCHAR | 5 |
| U_TIME | Boarding time | DATETIME | 19 |
| D_ID | Getting-off station ID | INT | 2 |
| D_NAME | Getting-off station name | VARCHAR | 5 |
| D_TIME | Getting-off time | DATETIME | 19 |

Steps of matching and fusing bus arrival data with bus IC card data are as follows:

(1) Extracting any bus IC card data, and correspondingly writing data of ID, LINE, and NUMBER in the bus IC card data into the ID, LINE, and NUMBER fields of the Mix_IC data sheet;
(2) Matching a record indicating that the bus arrival time is closest to the card-swiping time field, which is consistent with the bus IC card data NUMBER field extracted in step (1) in the bus arrival data sheet, and correspondingly writing station ID and bus arrival time fields of this record into the boarding station ID and boarding time fields of the Mix IC data sheet, until all the bus IC card data are traversed;

Data of the same rail transit trip are recorded in "boarding station" and "getting-off station "two fields. The rail transit card-swiping data need to be processed before being placed in the Mix_IC data sheet, the steps are as follows:

(1) Arranging rail transit card-swiping data according to IC card record IDs first, and then further arranging record time fields of the same IC card record ID;
(2) Extracting two continuous rail transit card-swiping data of step (1), wherein the IC card record ID and line name fields are identical, the line operation direction field of the previous data is "boarding station", and the line operation direction field of the latter data is "getting-off station"; and correspondingly writing data of the IC card record ID and line name fields into the IC card record ID and line name fields of the Mix_IC data sheet;
(3) Correspondingly writing station name and card-swiping time for boarding station of the previous data into the boarding station name and boarding time fields of the Mix_IC data sheet, and correspondingly writing station name and card-swiping time for getting-off station of the latter data into the getting-off station name and getting-off time fields of the Mix_IC data sheet;
(4) Matching boarding and getting-off station IDs according to the station ID sheet, station name for the boarding station, and the station name for getting-off station, and writing these data into the boarding station ID and getting-off station ID fields of the Mix IC data sheet, until all rail transit card-swiping data are traversed;

(2.2) Acquisition of Passenger Getting-off Stations
It is found by analyzing the residents travel behavior that the number of home-based bus travelers takes a high proportion in the total number of travelers, i.e. most travelers take home as both starting point and end point in their daily trip, and the travel activity chain forms a closed loop; for a traveler using the bus IC card more than twice in a day, the getting-off station where he/she takes the ground bus arrives can be determined according to the travel activity chain;
The getting-off station is determined using data recorded in the Mix IC data sheet, and the acquired getting-off station data are written into the getting-off station ID field of the Mix IC data sheet; steps of judging passenger getting-off stations are as follows:

(1) Extracting data of the same ID from the Mix_IC data sheet, and arranging them according to the boarding time field;
(2) Judging whether the previous data and the latter data of the same ID are for the same line: if it is judged that the two data are for the same line, taking the latter card-swiping boarding station as the previous card-swiping getting-off station; and if it is judged that the two data are for different lines, taking a transfer station of the previous card-swiping line nearest to the latter card-swiping boarding station as the getting-off station of the previous data;

(3) Taking the boarding station of the first card-swiping as the getting-off station of the last card-swiping for the same ID, until all data in the Mix IC data sheet are traversed;

(2.3) Judgment of Passenger Transfer Behavior

Whether the interval between the previous getting-off time and the latter boarding time exceeds the set upper limit of transfer time is used as a basis for judging whether the two consecutive bus travel is a transfer behavior.30 minutes are set as the upper limit of transfer time.

First, there is a need to match getting-off time of passengers, the steps are as follows:

(1) Extracting a data from the Mix_IC data sheet, matching the bus number, line operation direction, and getting-off station ID fields in the Mix IC data sheet with the bus number, line operation direction, and station ID fields in the bus arrival data sheet to obtain bus arrival time; Buses repeatedly operate between the up direction and the down direction in one day, there should be multiple bus arrival time at the same getting-off station in the bus arrival data sheet;

(2) Selecting bus arrival time, from the boarding time field in the Mix_IC data sheet, which is after the boarding time and having the shortest time interval as the getting-off time; and writing the matched getting-off time into the getting-off time field of the Mix_IC data sheet, until all data in the Mix_IC data sheet are traversed;

Judging whether two consecutive card-swiping records of a passenger belong to a transfer, the steps are as follows:

(1) Arranging the Mix_IC data sheet according to the IC card record IDs first, and then ranking record IDs of the same IC card according to the boarding time field;

(2) Extracting two consecutive records of the same ID, subtracting the getting-off card-swiping time of the previous data from the boarding card-swiping time of the latter data, and if the time interval is less than 30 minutes, considering it as a transfer; and traversing all data in the Mix IC data sheet.

II. Establishment of Model

2. Model Hypothesis

(1) Up and down directions of both ground buses and rail transits are taken as two different lines, i.e. there is only one operation direction for one line. it is supposed that all buses depart from the origin station according to the timetable strictly, the influence of road traffic condition on bus operation is neglected, and the travel time distribution of buses among all stations is already known; departure intervals of buses at the same time period are identical, the number of buses on the same line is fixed, and models of buses are all identical; buses departure according to the sequence of operation, there is no bunching and delay at station; non-transfer passengers are evenly distributed in the process of arriving at the station, and the arrival rates of passengers at the same time period are identical; the transfer walking time of passengers at the transfer station is already known, and the transfer walking time is less than the departure interval between a ground bus and a rail transit; passengers get on the bus as long as the bus arrives at the station, ignoring the situation of continuing to wait due to traffic jam and other reasons; operation buses on the line are all whole-line buses, ignoring the shuttle bus, station express scheduling scheme.

(2) Parameter Definitions

$s$ -Sequence of ground bus stations, $s \in S$;

$s$ -Sequence of transfer stations,;

$e_{\overline{s}}$ -Number of transfer stations;

$B^i$ -Ground bus departing within the study period and having the serial number of $i$;

$R^j$ -Rail transit departing at study time period and having the serial number of $j$;

$e_B$ -Departure number of ground buses $B$ within the study period;

$e_R$ -Departure number of rail transit R within the study period;

$a$ -Duration of study time period, $a = T_{end} - T_{start}$;

$h_B$ -Departure interval of ground buses $B$ within the study period;

$h_R$ -Departure interval of rail transit R within the study period;

$h_{B,\min}$, $h_{B,\max}$ -Minimum and maximum departure intervals of ground buses;

$h_{R.\min}$, $h_{R,\max}$ -Minimum and maximum departure intervals of rail transit;

$\gamma_B^s$ -Arrival rate of passengers taking ground buses $B$ at station $s$ within the study period;

$t_{BR}^{\bar{s}}$ -Walking time at transfer station $\bar{s}$ from ground bus station to rail transit station;

$T_B^{i,\bar{s}}$ -Time when ground bus $B^i$ arrives at transfer stations ;

$T_R^{j,\bar{s}}$ -Time when rail transit $R^j$ arrives at transfer station $\bar{s}$;

$T_B^1$ -Time when the ground bus with the serial number of 1 departs from the origin station;

$T_R^1$ -Time when the rail transit with the serial number of 1 departs from the origin station;

$t_B^{\bar{s}}$ -Travel time for ground bus to run to transfer station $\bar{s}$ from the origin station;

$t_R^{\bar{s}}$ -Travel time for rail transit to run to transfer station $\bar{s}$ from the origin station in the study section;

$t_B$ -Travel time of ground bus within the study period;

$t_R$ -Travel time of rail transit in the study section within the study time period;

$L_B^{\bar{s}}$ -Distance between origin station of ground bus line and transfer station $\bar{s}$;

$L_R^{\bar{s}}$ -Distance between origin station of rail transit line and transfer station $\bar{s}$;

$L_B$ -Entire length of ground bus line;

$L_R$ -Length of rail transit line in study section;

$U_c$ -Time value of unit passenger waiting time (dollar/minute);

$U_p$ -Operation cost of unit departure number of ground bus line (dollar/km);

$C_B$ -Waiting time cost for non-transfer passengers to take a ground bus within the study period;

$C_{BR}$ -Transfer waiting time cost for passengers to transfer from ground bus to rail transit within the study period;

$C_{RB}$ -Transfer waiting time cost for passengers to transfer from rail transit to ground bus within the study period;

$C_P$ -Cost of bus operation enterprise within the study period;

$C_S$ -Total system cost within the study period;

(3)Constraint Conditions

According to model hypothesis, the transfer walking time of a passenger at the transfer station is less than the departure interval between a ground bus and a rail transit, for all $\bar{s} \in \bar{S}$,

$$t_{BR}^{\bar{s}} \leq \left( h_B, h_R \right)_{\min} \quad (3.1)$$

The departure interval between ground bus and rail transit should not be less than the minimum departure interval, and should not be greater than the maximum departure interval at the same time, then:

$$h_{B,\min} \leq h_B \leq h_{B,\max} \quad (3.2)$$

$$h_{R,\min} \leq h_R \leq h_{R,\max} \quad (3.3)$$

(4) Objective Function

The relationship between the departure number of ground buses $e_B$ within the study time period and the departure interval $h_B$ is:

$$e_B = \left[ \frac{a}{h_B} \right] \quad (4.1)$$

The relationship between the departure number of rail transit $e_R$ within the study time period and the departure interval is:

$$e_R = \left[ \frac{a}{h_R} \right] \quad (4.2)$$

1) Waiting time cost for non-transfer passenger to take ground bus

For a passenger who arrives at station $s$ and takes ground bus $B^i$ departing within the study time period and having a serial number of $i$, the waiting time can be expressed as:

$$c_B^{i,s} = \frac{1}{2} U_c \gamma_B^s \left( h_B \right)^2 \quad (4.3)$$

Then, the waiting time cost of the non-transfer passenger can be expressed as:

$$C_B = \sum_{s=1}^{e_s} \sum_{i=1}^{e_B} c_B^{i,s} \quad (4.4)$$

2) Transfer waiting time cost for passenger to transfer from ground bus to rail transit

The time $T_B^i$ when ground bus $B^i$ with a serial number of $i$ arrives at the transfer station $\bar{s}$ can be expressed as:

$$T_B^{i,\bar{s}} = T_B^1 + (i-1)h_B + t_B^{\bar{s}} \quad (4.5)$$

where the travel time $t_B^{\bar{s}}$ for the ground bus to run to the transfer station $\bar{s}$ from the origin station can be calculated using equation 4.6:

$$t_B^{\bar{s}} = \frac{L_B^{\bar{s}}}{L_B} t_B \quad (4.6)$$

The time when rail transit $R^j$ with a serial number of $j$ arrives at the transfer station $\bar{s}$ can be expressed as:

$$T_R^{j,\bar{s}} = T_R^1 + (j-1)h_R + t_R^{\bar{s}} \quad (4.7)$$

where the travel time $t_R^{\bar{s}}$ for the rail transit to run to the transfer station $\bar{s}$ from the origin station can be calculated using equation 4.8:

$$t_R^{\bar{s}} = \frac{L_R^{\bar{s}}}{L_R} t_R \quad (4.8)$$

The walking time for a passenger to transfer from ground bus $B^i$ to rail transit $R^j$ at transfer station $\bar{s}$ is $t_{BR}^{\bar{s}}$, and the transfer waiting time can be expressed as:

$$\Box t_{BR}^{\bar{s}} = \eta_{BR}^{i,j} \left( T_R^{j,\bar{s}} - T_B^{i,\bar{s}} - t_{BR}^{\bar{s}} \right) \quad (4.9)$$

where $\eta_{BR}^{i,j}$ is a Boolean variable,

$$\eta_{BR}^{i,j} = \begin{cases} 1; T_R^{j-1,\bar{s}} < T_B^{i,\bar{s}} + t_{BR}^{\bar{s}} \leq T_R^{j,\bar{s}} \\ 0; \text{others} \end{cases} \quad (4.10)$$

The total number of passengers who take the ground bus departing within the study time period and get down at transfer station $\bar{s}$ is $Q_d^{\bar{s}}$, if the transfer rate of transfer from ground bus to rail transit at transfer station $\bar{s}$ is $\lambda_{BR}^{\bar{s}}$, then the total number of passengers who take the ground bus departing within the study time period and get down at transfer station $\bar{s}$ to transfer to rail transit can be calculated according to equation 4.11:

$$P_{BR}^{\bar{s}} = \lambda_{BR}^{\bar{s}} Q_d^{\bar{s}} \quad (4.11)$$

If passengers who transfer from the ground bus to rail transit at transfer station $\bar{s}$ are equally distributed to all ground buses, the number of passengers who take ground bus $B^i$ and transfer to rail transit at transfer station $\bar{s}$ can be expressed as:

$$p_{BR}^{\bar{s}} = \frac{P_{BR}^{\bar{s}}}{e_B} \quad (4.12)$$

By considering the hypothesis that transfer walking time $t_{BR}^{\bar{s}}$ does not exceed the departure interval of ground buses, the situation of transfer from ground bus departing within time period $k$ to rail transit departing within time period $k+1$ cannot occur. Therefore, the transfer waiting time cost for passenger to transfer from rail transit to ground bus at transfer station $\bar{s}$ is:

$$c_{BR}^{\bar{s}} = U_c \sum_{j=1}^{e_R^k} \sum_{i=1}^{e_B^k} \eta_{BR}^{i,j} p_{BR}^{\bar{s}} (T_R^{j,\bar{s}} - T_B^{i,\bar{s}} - t_{BR}^{\bar{s}})$$

$$(4.13)$$

The transfer waiting time cost for passengers to transfer from ground buses to rail transit at all transfer stations within the study time period is:

$$C_{BR} = U_c \sum_{\bar{s}=1}^{e_{\bar{s}}} \sum_{j=1}^{e_R^k} \sum_{i=1}^{e_B^k} \eta_{BR}^{i,j} p_{BR}^{\bar{s}} (T_R^{j,\bar{s}} - T_B^{i,\bar{s}} - t_{BR}^{\bar{s}})$$

$$(4.14)$$

where

$$\eta_{BR}^{i,j} = \begin{cases} 1; T_R^{j-1,\bar{s}} < T_B^{i,\bar{s}} + t_{BR}^{\bar{s}} \leq T_R^{j,\bar{s}} \\ 0; \text{others} \end{cases}$$

$$(4.15)$$

3) Transfer waiting time cost for passenger to transfer from rail transit to ground bus

The walking time for a passenger to transfer from rail transit $R^j$ to ground bus $B^i$ at transfer station $\bar{s}$ is $t_{RB}^{\bar{s}}$, and the transfer waiting time can be expressed as:

$$\square t_{RB}^{\bar{s}} = \eta_{RB}^{j,i} \left( T_B^{i,\bar{s}} - T_R^{j,\bar{s}} - t_{RB}^{\bar{s}} \right)$$

$$(4.16)$$

where $\eta_{RB}^{j,i}$ is a Boolean variable,

$$\eta_{RB}^{j,i} = \begin{cases} 1; T_B^{i-1,\bar{s}} < T_R^{j,\bar{s}} + t_{RB}^{\bar{s}} \leq T_B^{i,\bar{s}} \\ 0; \text{others} \end{cases}$$

$$(4.17)$$

The total number of passengers who get on at transfer station $\bar{s}$ and take ground bus departing within the study time period is $Q_u^{\bar{s}}$, and if the transfer rate of transfer from rail transit to ground bus at transfer station $\bar{s}$ is $\lambda_{RB}^{\bar{s}}$, the total number of passengers who get on at transfer station $s$ and transfer to ground bus departing within the study time period can be calculated according to equation 4.18:

$$P_{RB}^{\bar{s}} = \lambda_{RB}^{\bar{s}} Q_u^{\bar{s}}$$

$$(4.18)$$

If passengers who transfer from rail transit to ground buses at transfer station $\bar{s}$ are equally distributed to all ground buses, the number of passengers who transfer from rail transit to ground bus $B^i$ at transfer station $\bar{s}$ can be expressed as:

$$p_{RB}^{\bar{s}} = \frac{P_{RB}^{\bar{s}}}{e_R} \quad (4.19)$$

By considering the hypothesis that transfer walking time $t_{BR}^{\bar{s}}$ does not exceed the departure interval of rail transit, the situation of transfer from rail transit departing within the time period $k$ to ground bus departing within time period $k+1$ cannot occur. Therefore, the waiting time cost for passengers to transfer from rail transit to ground buses at transfer station $\bar{s}$ within the time period $k$ is:

$$c_{RB}^{\bar{s}} = U_c \sum_{i=1}^{e_B^k} \sum_{j=1}^{e_R^k} \eta_{RB}^{j,i} p_{RB}^{\bar{s}} (T_B^{i,\bar{s}} - T_R^{j,\bar{s}} - t_{RB}^{\bar{s}})$$

$$(4.20)$$

The waiting time cost for passengers to transfer from rail transit to ground buses at all transfer stations within the study time period is:

$$C_{RB} = U_c \sum_{s=1}^{e_{\bar{s}}} \sum_{i=1}^{e_B^k} \sum_{j=1}^{e_R^k} \eta_{RB}^{j,i} p_{RB}^{\bar{s}} (T_B^{i,\bar{s}} - T_R^{j,\bar{s}} - t_{RB}^{\bar{s}})$$

$$(4.21)$$

where

$$\eta_{RB}^{j,i} = \begin{cases} 1; T_B^{i-1,\bar{s}} < T_R^{j,\bar{s}} + t_{RB}^{\bar{s}} \le T_B^{i,\bar{s}} \\ 0; \text{others} \end{cases}$$

$$(4.22)$$

4) Bus Enterprise Operation Cost
The bus enterprise operation cost is related to the entire length of the line and the departure number within the study time period, and can be expressed by equation 4.26:

$$C_P = U_P L_B e_B \quad (4.23)$$

5) Total System Cost
The total system cost within the study period includes: waiting time cost for non-transfer passenger to take ground buses, waiting time cost for passenger to transfer from ground bus to rail transit, waiting time cost for passenger to transfer from rail transit to ground bus, and bus enterprise operation cost, i.e.:

$$C_S = C_B + C_{BR} + C_{RB} + C_P \quad (4.24)$$

The objective function is to minimize total system cost, i.e. min $C_S$; and the decision variable is the departure interval $h_B$ of ground buses.

Fig.7( Fig.7 as an illustration in Abstract)

Fig.1

Fig.2

Bus GPS data → Extracting GPS data in the up direction

Extracting GPS data in the up direction → Data ordering

Data ordering → Extracting two successive GPS data of the same bus

Station data in the up direction → Extracting one station data

Extracting two successive GPS data of the same bus → Matched or not

Extracting one station data → Matched or not

Matched or not — No → Extracting two successive GPS data of the same bus

Matched or not — Yes → Judging bus arrival time

Judging bus arrival time → Storing bus arrival data

Storing bus arrival data → Traversing all station data or not

Traversing all station data or not — Yes → End

Traversing all station data or not — No → Extracting one station data

Fig.3

Extracting data in the up direction ← Bus arrival data

Data ordering

↓

Extracting one data

Origin and end station data in the up direction

↓

Matching origin and end station arrival time

Yes

↓

Calculating bus travel time

↓

Storing bus travel time data

↓

Traversing all bus arrival data or not — Yes → End

No

Fig.4

Bus card-swiping data

Subway card-swiping data

↓

Extracting one bus card-swiping data

Bus arrival data

Extracting two paired rail bus card-swiping data

↓

Matching boarding stations

Matching drawing/ departing data stations

↓

Storing to 3Mix_IC data sheet

Fig.5

Fig.6

Fig.7

Fig.8

Fig.9

<h1 style="text-align:center">INTERNATIONAL SEARCH REPORT</h1>

| International application No. |
|---|
| PCT/CN2017/083609 |

**A. CLASSIFICATION OF SUBJECT MATTER**

G08G 1/123 (2006.01) i

According to International Patent Classification (IPC) or to both national classification and IPC

**B. FIELDS SEARCHED**

Minimum documentation searched (classification system followed by classification symbols)

G08G 1/-

Documentation searched other than minimum documentation to the extent that such documents are included in the fields searched

Electronic data base consulted during the international search (name of data base and, where practicable, search terms used)

CNPAT, CNKI, WPI, EPODOC: 公交, 公共交通, 轨道交通, 地铁, 大数据, 线路, 时刻表, 优化, 模型, large data, bus line, schedule, optimization, transfer station, data table, time table, dynamic

**C. DOCUMENTS CONSIDERED TO BE RELEVANT**

| Category* | Citation of document, with indication, where appropriate, of the relevant passages | Relevant to claim No. |
|---|---|---|
| PX | CN 106448233 A (DALIAN UNIVERSITY OF TECHNOLOGY) 22 February 2017 (22.02.2017), claim 1 | 1 |
| A | CN 104376716 A (NANTONG UNIVERSITY) 25 February 2015 (25.02.2015), description, paragraphs [0008]-[0039], and figures 1 and 2 | 1 |
| A | CN 101630440 A (BEIJING JIAOTONG UNIVERSITY) 20 January 2010 (20.01.2010), entire document | 1 |
| A | CN 101799981 A (SOUTH CHINA UNIVERSITY OF TECHNOLOGY) 11 August 2010 (11.08.2010), entire document | 1 |
| A | CN 104504229 A (ELECTRONIC UNIVERSITY OF SCIENCE TECHNOLOGY OF HANGZHOU) 08 April 2015 (08.04.2015), entire document | 1 |

☒ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 July 2017 | 27 July 2017 |

| Name and mailing address of the ISA | Authorized officer |
|---|---|
| State Intellectual Property Office of the P. R. China No. 6, Xitucheng Road, Jimenqiao Haidian District, Beijing 100088, China | ZHAO, Yunfeng |
| Facsimile No. (86-10) 62019451 | Telephone No. (86-10) 62413604 |

Form PCT/ISA /210 (second sheet) (July 2009)

<table>
<tr><td colspan="2" align="center"><strong>INTERNATIONAL SEARCH REPORT</strong></td><td>International application No.<br>PCT/CN2017/083609</td></tr>
<tr><td colspan="3">C (Continuation).    DOCUMENTS CONSIDERED TO BE RELEVANT</td></tr>
<tr><td>Category*</td><td>Citation of document, with indication, where appropriate, of the relevant passages</td><td>Relevant to claim No.</td></tr>
<tr><td>A</td><td>JP 5164208 B2 (AB PLANNING CENT. K.K.) 21 March 2013 (21.03.2013), entire document</td><td>1</td></tr>
</table>

Form PCT/ISA /210 (continuation of second sheet) (July 2009)

## INTERNATIONAL SEARCH REPORT
Information on patent family members

| | International application No. |
|---|---|
| | PCT/CN2017/083609 |

| Patent Documents referred in the Report | Publication Date | Patent Family | Publication Date |
|---|---|---|---|
| CN 106448233 A | 22 February 2017 | None | |
| CN 104376716 A | 25 February 2015 | CN 104376716 B | 11 January 2017 |
| CN 101630440 A | 20 January 2010 | CN 101630440 B | 16 March 2011 |
| CN 101799981 A | 11 August 2010 | CN 101799981 B | 01 February 2012 |
| CN 104504229 A | 08 April 2015 | None | |
| JP 5164208 B2 | 21 March 2013 | JP 2009294904 A | 17 December 2009 |

Form PCT/ISA /210 (patent family annex) (July 2009)